# EUROPÄISCHE PATENTSCHRIFT

(11) **EP 1 634 763 B1**
(45) Veröffentlichungstag und Bekanntmachung des Hinweises auf die Patenterteilung: **27.10.2010**
(21) Anmeldenummer: 05090244.4
(22) Anmeldetag: 24.08.2005
(51) Int. Cl.: B60N 2/07, B60N 2/075, F16C 29/00, F16C 33/38

(54) **Bausatz für Längsführungen für Kraftfahrzeugsitze und Verfahren zu dessen Montage**
Kit for automobile seat slides and related assembling method
Kit pour glissière de siège de véhicule et procédé pour son montage

(30) Priorität: 10.09.2004 DE 102004044716
(43) Veröffentlichungstag der Anmeldung: 15.03.2006
(73) Patentinhaber: Brose Fahrzeugteile GmbH & Co. KG, Coburg, 96450 Coburg (DE)
(72) Erfinder: Kröner, Gregor, 96120 Bischberg (DE); Brandt, Carsten, Lake Orion, MI 48360 (US)
(74) Vertreter: Baumgärtel, Gunnar

(56) Entgegenhaltungen:
- DE-A1- 2 437 499
- DE-A1- 10 236 068
- DE-A1- 19 812 045
- FR-A- 1 246 052
- JP-U- 57 100 539

## Beschreibung

Die Erfindung betrifft einen Bausatz für Längsführungen für Kraftfahrzeugsitze gemäß dem Oberbegriff des Anspruchs 1 und ein Verfahren zur Montage einer solchen Längsführung gemäß dem Oberbegriff des Anspruchs 18.

Zur Befestigung von Fahrzeugsitzen in Fahrzeugen sind Längsführungen bekannt, bei denen der Fahrzeugsitz entlang paralleler Schienen in Fahrzeuglängsrichtung, also im Wesentlichen in Fahrtrichtung, verstellbar ist. Hierzu werden üblicher Weise zwei parallel zueinander in Fahrtrichtung ausgerichtete Unterschienen im Fahrzeuginnenraum am Fahrzeugboden angebracht, an denen dann zwei mit dem jeweiligen Fahrzeugsitz verbundene Sitzschienen verschiebbar befestigt sind. Mittels dieser Konstruktion ist es möglich, den Fahrzeugsitz entlang der Schienen zu verschieben und ihn auf diese Weise auf die Körpermaße des jeweiligen Fahrzeuginsassen einzustellen. Diese Einstellung ist besonders wichtig für den Fahrersitz, da nur durch eine korrekte Sitzhaltung und einen richtig eingestellten Abstand des Sitzes zu den Pedalen und dem Lenkrad eine sichere Bedienung des Fahrzeugs erreicht werden kann.

In der DE 198 12 045 A1 ist eine solche Längsführung für Kraftfahrzeugsitze mit Oberschiene und Unterschiene beschrieben, wobei die Schienen jeweils profiliert geformt sind und sich wechselseitig in ihren Randbereichen umklammern. Durch diese Umklammerung entstehen zwei gegenüberliegende Umklammerungsbereiche, die gleichzeitig zwei Lagerbereiche ausbilden. Der erste Lagerbereich ist mit einem Kugellager versehen; im zweiten Lagerbereich ist ein Lagerkörper mit zwei senkrecht zueinander angeordneten Lagerführungen angeordnet, die jeweils zwischen den Schienen auftretende Kräfte in Sitzbelastungsrichtung und senkrecht dazu aufnehmen. Durch diese Lagerkörper wird erreicht, dass sich die Schienen auch bei Belastung leicht gegeneinander verschieben lassen und ein Klappern der Schienen beim Fahren weitgehend verhindert wird.

Im Bereich der Kraftfahrzeugsitze ist es üblich, bei höherwertigen Sitzen bzw. höherwertigen Fahrzeugen einige oder alle Funktionen der jeweiligen Sitze über elektrische Verstellmotoren anzutreiben und so eine automatische Sitzverstellung per Knopfdruck zu erreichen. So werden auch Sitzlängsführungen häufig mittels Verstellmotoren verstellt, wobei aber andererseits auch manuell betriebene Sitzlängsführungen häufig verwendet werden.

An manuell und elektrisch verstellbare Längsführungen werden aber unterschiedliche mechanische Anforderungen gestellt. Bei manueller Sitzverstellung sollte die Führung besonders leichtgängig sein, um ein Verschieben des Sitzes durch die auf eben diesem Sitz sitzende Person zu ermöglichen. Bei elektromotorischer Sitzverstellung der Längsführung kann der Verstellmotor ein höheres Losbrechmoment problemlos überwinden, so dass eine höhere Reibung zwischen den Schienen unproblematisch ist, vergleiche DE 198 12 045 A1. Eine höhere Reibung zwischen den Schienen ist hier sogar erwünscht, um beispielsweise Überholeffekte der Schienen zu vermeiden, die den elektrischen Antrieb oder das Getriebe beschädigen können oder die zu Klappergeräuschen führen können.

Aus der DT 24 37 499 A1 ist eine Gleitführung für Sitze von Fahrzeugen bekannt, die eine Unterschiene und eine hierauf längsbeweglich gelagerte Oberschiene umfasst, wobei unterschiedliche Rollkörper, z. B. in Form von Kugeln oder Lagerpfalzen dargestellt sind, die zur gleitenden Lagerung der Oberschiene an der Unterschiene verwendet werden können.

In der FR 1.246.052 A ist eine Schienenlängsführung mit Oberschiene und Unterschiene beschrieben, die über Rollkörper in Form von Kugeln und Lagerwalzen längsbeweglich aneinander gelagert sind, wobei unterschiedliche (käfigartige) Träger zur Aufnahme jener Rollkörper dargestellt sind und die Ausgestaltung der Führungsschienen hieran angepasst ist.

Die JP 57-100 539 U zeigt eine Schienenlängsführung für Kraftfahrzeugsitze mit Oberschiene und Unterschiene, die über Rollkörper beweglich aneinander gelagert sind mit unterschiedlichen möglichen Ausgestaltungen der Rollkörper.

Aufgabe der vorliegenden Erfindung ist daher, eine flexible Längsführung für Kraftfahrzeugsitze und ein Verfahren zu deren Montage anzugeben, die für unterschiedliche Antriebsarten, insbesondere für mechanische und motorische Antriebe, verwendbar ist.

Die Aufgabe wird durch einen Bausatz für Längsführungen für Kraftfahrzeugsitze mit den Merkmalen des Anspruchs 1 gelöst.

Demgemäß weist der Bausatz eine fest vorgegebene Unterschiene zur Anordnung in einem Kraftfahrzeuginnenraum und eine fest vorgegebene Oberschiene zur Anordnung an einem Kraftfahrzeugsitz auf. An der fest vorgegebenen Unterschiene ist die fest vorgegebene Oberschiene verschiebbar gehalten und zwischen der fest vorgegebenen Unterschiene und der fest vorgegebenen Oberschiene ist mindestens ein Lagerkörper zur zumindest teilweisen Aufnahme zwischen der Oberschiene und der Unterschiene wirkender Kräfte angeordnet. Erfindungsgemäß umfasst der Bausatz einen ersten und einen zweiten Lagerkörper unterschiedlicher Gleiteigenschaften und entweder der erste oder der zweite Lagerkörper ist zwischen der fest vorgegebenen Unterschiene und der fest vorgegebenen Oberschiene angeordnet.

Bei der Unterschiene und der Oberschiene handelt es sich um fest vorgegebene Teile, also um Teile, die innerhalb des Bausatzes und für verschiedene Antriebsarten nicht verändert werden. Eine Veränderung der Gleiteigenschaften der Oberschiene gegenüber der Unterschiene und damit unterschiedliche Einsatzmöglichkeiten bzw. unterschiedliche Antriebsmöglichkeiten werden bei dem Bausatz ausschließlich durch die Auswahl und Verwendung unterschiedlicher Lagerkörper unterschiedlicher Gleiteigenschaften erreicht. Hierdurch können zum Aufbau von Längsführungen für unterschiedliche Antriebsarten oder zur Ausbildung anderer unterschiedlicher mechanischer Spezifikationen immer die gleichen Unter- und Oberschienen verwendet werden, wodurch Kosten eingespart werden können und die vorzuhaltende Teilevielfalt verringert wird. Für unterschiedliche Aufgaben müssen so lediglich verschiedene Lagerkörper unterschiedlicher Gleiteigenschaften vorgehalten werden. Die Kraftfahrzeugsitze und die jeweiligen Kraftfahrzeuge können so immer mit den gleichen Unter- und Oberschienen ausgestattet werden, lediglich der Lagerkörper muss dann noch an die jeweilige Ausstattungsvariante des Kraftfahrzeugs angepasst werden. Hierdurch können auch Zuordnungsfehler in der Montage durch einfaches Austauschen der Lagerkörper behoben werden.

Die Erfindung macht sich dabei die Erkenntnis zu nutze, dass eine Sitzlängsverstellung, die für unterschiedliche Antriebsarten nutzbar sein soll, unterschiedliche Anforderungen an die Leichtgängigkeit der Längsverstellung aufweist. Bei einer handbetätigten bzw. manuellen Sitzverstellung ist eine besonders leichtgängige Längsführung erwünscht, wohingegen bei einer motorisch bewegten Sitzverstellung eine demgegenüber schwergängige Verschiebbarkeit der Sitzschienen gegeneinander erwünscht ist, um ein Klappern des Getriebes und Verstellmotors zu verhindern. Durch höhere Reibung werden außerdem Überholeffekte vermieden, die den elektrischen Antrieb beschädigen könnten.

Die unterschiedlichen Gleiteigenschaften des jeweiligen Lagerkörpers werden durch die bedarfsweise Anordnung von Rollen- oder Kugeln zur Lagerung eingestellt. Bei einer Verwendung eines Rollenlagers im Bereich des Lagerkörpers wird beispielsweise eine besonders leichtgängige Lagerung bzw. eine geringe Reibung der Oberschiene gegenüber der Unterschiene erreicht, wohingegen durch die Verwendung eines ausschließlich aus einem Kunststoff bestehenden Lagerkörpers mit Gleit-führungen, der keinerlei drehbare Teile aufweist, eine geringere Leichtgängigkeit bzw. eine höhere Reibung zwischen den beiden Schienen erreicht wird. Typischer Weise wird ein Lagerkörper, der Rollenlager aufweist, für eine handbetriebene Längsführung und ein Lagerkörper, der ausschließlich aus einem Kunststoff besteht und keinerlei Rollen aufweist, für eine durch einen Stellmotor angetriebene Längsführung eingesetzt. Dabei weisen der erste und der zweite Lagerkörper jeweils einen identischen Träger auf.

Die Lagerkörper sind so ausgebildet, dass mindestens ein erster Lagerkörper eine geringere Reibung zwischen der Oberschiene und der Unterschiene bewirkt, als ein zweiter Lagerkörper. Ein erster Lagerkörper kann daher zum Aufbau einer Längsführung für eine mechanische Verstellung und ein zweiter Lagerkörper zum Aufbau einer motorisch betriebenen Verstellung verwendet werden.

Eine hohe Leichtgängigkeit bzw. eine geringe Reibung zwischen der Ober- und der Unterschiene wird dadurch erreicht, dass der erste Lagerkörper mindestens einen Rollkörper, insbesondere eine Lagerwalze, eine Lagerrolle und/oder eine Lagerkugel aufweist. Die Lagerung der Oberschiene gegenüber der Unterschiene entspricht dann im Wesentlichen der eines Kugellagers.

Zum Aufbau des zweiten Lagerkörpers geringerer Leichtgängigkeit bzw. höherer Reibung kann der zweite Lagerkörper mindestens eine Gleitführung aus einem Kunststoff, insbesondere Polyamid aufweisen. Hierdurch wird eine Gleitreibung zwischen der Unterschiene und der Oberschiene erzeugt, bei der die mechanischen Eigenschaften von den verwendeten Materialien der Schienen und des Lagerkörpers und der Größe der Kontaktfläche der Gleitführung abhängen.

Durch die Verwendung von Rollenlagern in dem ersten und Gleitführungen in dem zweiten Lagerkörper können bereits einfach zwei unterschiedliche mechanische Charakteristika der jeweiligen Längsführung erhalten werden.

Es besteht dabei die Möglichkeit, beliebige Abstufungen der Gleiteigenschaften der Lagerkörper vorzunehmen und eine Vielzahl unterschiedlicher Lagerkörper in dem Bausatz für jeweils unterschiedliche Anwendungen vorzusehen. Diese unterschiedlichen Lagerkörper werden allerdings weiterhin mit dem einen, fest vorgegebenen Satz von Schienen verwendet. Weiterhin können natürlich auch mehrere, fest vorgegebene Schienen, insbesondere zwei Paare je Sitz, vorgesehen werden, je nach der gewünschten Befestigung des Sitzes im Fahrzeug.

Vorliegend weisen der Träger des ersten Lagerkörpers und der Träger des zweiten Lagerkörpers jeweils mindestens eine Aufnahme für mindestens einen Rollkörper auf, wobei in mindestens einer Aufnahme des ersten Lagerkörpers mindestens ein Rollkörper aufgenommen ist und der zweite Lagerkörper nur den Träger selbst aufweist. Mit anderen Worten wird der Träger des ersten Lagerkörpers mit Rollkörpern bestückt und der Träger des zweiten Lagerkörpers einfach als solcher als Lagerkörper verwendet, ohne dass hier Rollkörper eingebracht werden. Auf diese Weise kann durch Verwendung des gleichen Teils, nämlich des gleichen Trägers, eine weite-re Verringerung der Teilezahl bei hoher Flexibilität erreicht werden und gleichzeitig Lagerkörper unterschiedlicher Gleiteigenschaften ausgebildet werden. Ein kostengünstiger Aufbau eines Lagerkörpers ergibt sich dabei, wenn der zweite Lagerkörper einstückig, insbesondere als Druckguss- oder Spritzgussteil ausgebildet ist.

Um den ersten und den zweiten Lagerkörper einfach und austauschbar mit den fest vorgegebenen Schienen verwenden zu können, weisen der erste und der zweite Lagerkörper identische Außenabmessungen auf.

Eine Verbesserung der Lagereigenschaften kann dadurch erreicht werden, dass der erste Lagerkörper und/oder der zweite Lagerkörper jeweils einen ersten Bereich zur Aufnahme von Kräften in Richtung der Sitzbelastung und jeweils einen zweiten Bereich zur Aufnahme von dazu senkrecht wirkenden Kräften aufweisen. Der erste Bereich und der zweite Bereich sind vorteilhaft senkrecht zueinander angeordnet. Hierdurch können beispielsweise auch Seitenführungskräfte des Kraftfahrzeugsitzes über die jeweiligen Lagerkörper abgestützt werden. Um die Gleiteigenschaften der jeweiligen Lagerkörper an die gewünschten Einsatzbereiche anzupassen, können in den ersten und zweiten Bereichen entweder Rollkörper oder Gleitführungen oder Kombinationen aus Gleitbereichen und Rollkörpern angeordnet werden.

Um die Lagerkörper auch bei einer Verschiebung der Oberschiene relativ zur Unterschiene in ihrer Position zu halten, sind an der Unterschiene und/oder der Oberschiene Anschläge vorgesehen, an denen sich der Lagerkörper abstützen kann. Hierdurch wird die Position des Lagerkörpers relativ zur Unterschiene bzw. zur Oberschiene festgelegt.

Die fest vorgegebene Oberschiene und die fest vorgegebene Unterschiene weisen vorteilhaft entlang ihrer Längsausdehnung jeweils mindestens ein im Wesentlichen U-förmiges Profil auf, über das sie miteinander verschiebbar in Eingriff stehen. Hierdurch wird eine kostengünstige und sichere Verbindung der beiden Schienen miteinander erreicht. Diese Schienen können flexibel für jede gewünschte Anwendungsform abgelängt werden und ermöglichen so einen flexiblen Einsatz auch mit unterschiedlichen Fahrzeugtypen. Wesentlich ist hier lediglich, dass der Querschnitt der fest vorgegebenen Unterschienen und Oberschienen für die unterschiedlichen Anwendungen konstant bleibt.

Die Aufgabe wird weiterhin durch ein Verfahren zur Montage von Längsführungen von Kraftfahrzeugsitzen mit den Merkmalen des Anspruchs 14 gelöst.

Demgemäß wird an mindestens einer fest vorgegebenen Unterschiene zur Anordnung im Kraftfahrzeuginnenraum eine fest vorgegebene Oberschiene zur Anordnung an einem Fahrzeugsitz verschiebbar befestigt. Zwischen der fest vorgegebenen Unterschiene und der fest vorgegebenen Oberschiene wird mindestens ein Lagerkörper zur zumindest teilweisen Aufnahme zwischen der Oberschiene und der Unterschiene wirkender Kräfte angeordnet. Erfindungsgemäß werden mindestens ein erster Lagerkörper und ein zweiter Lagerkörper unter schiedlicher Gleiteigenschaften bereit gestellt und es wird entweder ein erster Lagerkörper oder ein zweiter Lagerkörper ausgewählt und zwischen der fest vorgegebenen Unterschiene und der fest vorgegebenen Oberschiene angeordnet.

Vorteilhaft wird hierbei zur Montage einer manuell verstellbaren Längsführung ein erster Lagerkörper, der im eingebauten Zustand eine gegenüber dem zweiten Lagerkörper geringere Reibung zwischen der Oberschiene und der Unterschiene bewirkt, und zur Montage einer motorisch angetriebenen Längsführung ein zweiter Lagerkörper, der im eingebauten Zustand eine gegenüber dem ersten Lagerkörper höhere Reibung zwischen der Oberschiene und der Unterschiene bewirkt, ausgewählt. Durch einfache und korrekte Auswahl der jeweiligen Lagerkörper lässt sich so auf flexible Weise eine den entsprechenden mechanischen Anforderungen des jeweiligen Antriebs gerecht werdende Längsführung montieren.

Eine sehr flexible Montage der Längsführung wird erreicht, indem der erste und der zweite Lagerkörper jeweils einen identischen Träger mit mindestens einer Aufnahme für mindestens einen Rollkörper aufweisen und zur Ausbildung eines ersten Lagerkörpers, der im eingebauten Zustand eine gegenüber dem zweiten Lagerkörper geringere Reibung zwischen der Oberschiene und der Unterschiene bewirkt, in mindestens einer Aufnahme mindestens ein Rollkörper angeordnet wird. Durch diese Art der Montage kann die Teilezahl weiter reduziert werden, da nun nur noch identische Trägerkörper vorzusehen sind, die je nach Antriebsart oder mechanischer Anforderung der Längsführung entweder mit Rollkörpern, insbesondere Lagerkugeln, Lagerwalzen oder Lagerrollen, bestückt werden müssen. Auch unterschiedliche Gleiteigenschaften der Lagerkörper können durch die Bestückung der Trägerkörper mit einer unterschiedlichen Anzahl von Rollkörpern erreicht werden. Beispielsweise können durch das Bestücken eines Trägers mit Rollkörpern in nur bestimmten Bereichen und dem Aussparen in anderen Bereichen Gleiteigenschaften erreicht werden, die zwischen denen eines Trägerkörpers mit Vollbestückung mit Rollkörpern und denen eines Trägerkörpers ohne Rollkörper liegen. Unterschiedliche Kombinationen von Rollkörpern und Gleitbereichen ergeben unterschiedliche Gleiteigenschaften, mittels derer die Lagerkörper an unterschiedliche mechanische Anforderungen angepasst werden können.

Die Erfindung wird nachfolgend an Hand der Zeichnungen der Figuren näher erläutert. Dabei zeigen:
- Fig. 1: Querschnitt durch einen Bausatz einer Längsführung im zusammengebauten Zustand mit einem Lagerkörper geringerer Reibung, der Lagerkugeln aufweist;
- Fig. 2: Schnitt A-A der Fig. 1;
- Fig. 3: Querschnitt durch einen Bausatz einer Längsführung im zusammengebauten Zustand in einer zweiten Ausführungsform mit einem Lagerkörper höherer Reibung;
- Fig. 4: Schnitt A-A der Fig. 3; und
- Fig. 5: Perspektivische Darstellung eines Lagerkörpers ohne Rollkörper.

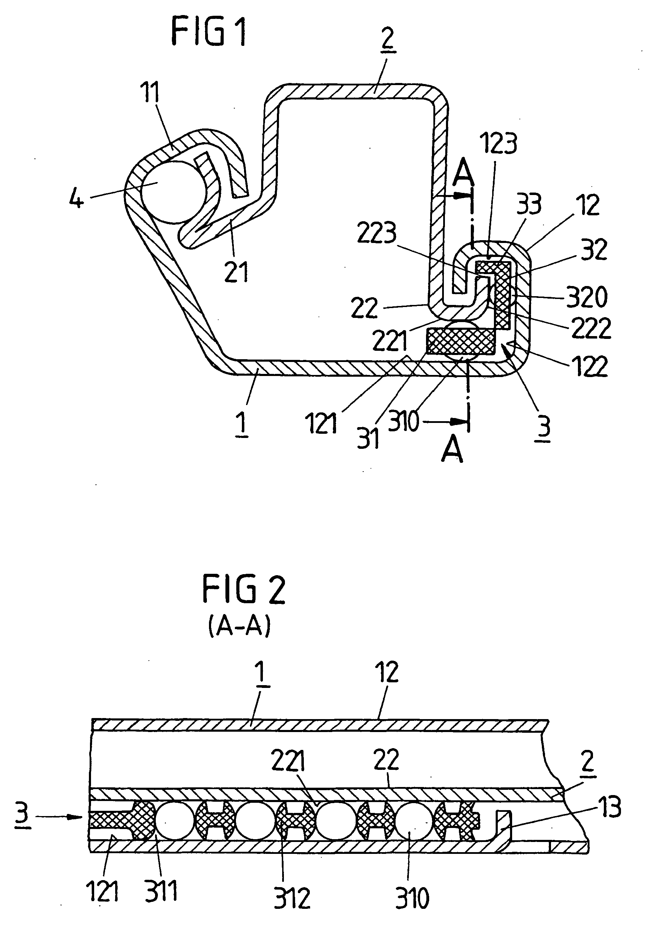

In den Figuren 1 und 2 ist ein Bausatz für eine Längsführung für Kraftfahrzeugsitze im bereits zusammengebauten Zustand des Bausatzes gezeigt. Die Figur 2 zeigt dabei einen Schnitt durch die in Figur 1 gezeigte Längsführung in der Ebene A-A.

Der Bausatz weist eine fest vorgegebene Unterschiene 1 auf, die am hier nicht gezeigten Boden eines Kraftfahrzeugs angeordnet und festgelegt wird. Eine fest vorgegebene Oberschiene 2, die am hier ebenfalls nicht gezeigten Fahrzeugsitz angeordnet und festgelegt wird, ist mit der Unterschiene 1 in Längsrichtung verschiebbar verbunden. Die Längsrichtung steht in der Figur 1 senkrecht auf der Papierebene und zeigt in Figur 2 in Richtung der Längsausdehnung der Unterschiene 1 bzw. der Oberschiene 2.

In einer üblichen Konfiguration sind zwei parallel zueinander in Fahrtrichtung des Fahrzeugs angeordnete Unterschienen 1 und zwei Oberschienen 2 vorgesehen, um einen einzigen Fahrzeugsitz in einem Fahrzeug längsverstellbar zu befestigen.

Zwischen der Unterschiene 1 und der Oberschiene 2 ist ein Lagerkörper 3 angeordnet, der zwischen den beiden Schienen 1, 2 wirkende Kräfte aufnimmt. Insbesondere die Kräfte, die vom (nicht dargestellten) Fahrzeugsitz durch Belegung mit einer Person über die Oberschiene 2 auf die Unterschiene 1 übertragen werden, werden so im Wesentlichen vom Lagerkörper 3 abgestützt. Der Lagerkörper 3 sorgt dafür, dass die Unterschiene 1 und die Oberschiene 2 auch bei Belastung des Fahrzeugsitzes problemlos und leichtgängig gegeneinander verschoben werden können. Der den Fahrzeugsitz belegende Fahrzeuginsasse kann daher eine Längsverstellung der Sitzposition auch dann einfach vornehmen, wenn er bereits selbst auf dem Sitz sitzt.

Diese Längsverstellung kann je nach Ausstattung des Fahrzeugs entweder manuell durch den Fahrzeuginsassen selbst oder elektrisch mittels eines Verstellmotors vorgenommen werden. Der Lagerkörper 3 ist dabei für die unterschiedlichen Anforderungen der unterschiedlichen Antriebe optimierbar. Der Bausatz weist daher mindestens zwei Lagerkörper unterschiedlicher Gleiteigenschaften bzw. unterschiedlicher Reibung auf, wobei der in den Figuren 1 und 2 gezeigte Lagerkörper 3 eine relativ geringe Reibung zwischen der Oberschiene 2 und der Unterschiene 1 erzeugt.

In der in den Figuren 1 und 2 gezeigten, fertig montierten Ausführungsform des Bausatzes ist dieser Lagerkörper 3 daher aufgrund seiner geringen Reibung für eine vom Fahrzeuginsassen selbst mechanisch betätigbare Längsverstellung ausgelegt.

Der Lagerkörper 3 weist hierzu einen ersten Bereich 31 auf, der zur Abstützung von vertikal auf die Oberschiene 2 wirkenden Kräften dient und daher die durch die Sitzbelastung von der Oberschiene 2 auf die Unterschiene 1 wirkenden Kräfte aufnimmt. Ein zweiter Bereich 32 ist senkrecht zum ersten Bereich 31 angeordnet, der senkrecht zur Sitzbelastung wirkende Kräfte abstützt. Der Lagerkörper 3 hat in der hier gezeigten Ausführungsform, wie aus Figur 1 zu ersehen, einen im Wesentlichen L-förmigen Querschnitt, wobei in der Funktionslage der erste Bereich 31 unten und der zweite Bereich 32 seitlich angeordnet ist.

Um eine hohe Leichtgängigkeit der Oberschiene 2 gegenüber der Unterschiene 1 zu erreichen bzw. eine möglichst geringe Reibung der beiden Schienen gegeneinander zu erreichen, weist der Lagerkörper 3 Rollkörper in Form von Lagerkugeln 310, 320 auf. Im unteren Bereich 31 des Lagerkörpers 3 sind Lagerkugeln 310 eines ersten Durchmessers und im seitlichen Bereich 32 des Lagerkörpers 3 Lagerkugeln 320 eines zweiten Durchmessers angeordnet. Die Lagerkugeln 320 des seitlichen Bereichs 32 sind dabei vorteilhaft kleiner, als die des unteren Bereichs; der Durchmesser der seitlichen Lagerkugeln 320 kann dabei beispielsweise 2/3 des Durchmessers der unteren Lagerkugeln 310 betragen. Der Lagerkörper 3 weist aufgrund der Anordnung von Lagerkugeln 310, 320 eine niedrige Reibung auf bzw. hat Gleiteigenschaften, die eine hohe Leichtgängigkeit bewirken.

Die unteren Lagerkugeln 310 liegen dabei jeweils an Oberflächen 121, 221 und die seitlichen Lagerkugeln 320 jeweils an Oberflächen 122, 222 der Unterschiene 1 und der Oberschiene 2 an.

Wie in Figur 2 deutlich zu erkennen, werden die Lagerkugeln 310 im Lagerkörper 3 in einem käfigförmigen Träger 312 angeordnet, der Aufnahmen 311 zur Aufnahme der Lagerkugeln 310 aufweist. Die Aufnahme der im seitlichen Bereich 32 angeordneten Lagerkugeln 320 erfolgt analog. Der Träger 312 kann aus einem Kunststoff, insbesondere Polyamid, bestehen und ist in der in den Figuren 1 und 2 gezeigten Ausführungsform einstückig, insbesondere als Druckguss oder Spritzgussteil, ausgebildet.

Der Lagerköper 3 weist einen weiteren Lagerbereich 33 auf, der im oberen Bereich des Lagerkörpers angeordnet ist und dafür sorgt, dass bei einem Abheben der Oberschiene 2 von der Unterschiene 1, beispielsweise beim Überfahren einer Unebenheit mit dem Kraftfahrzeug, Bereiche 223 der Oberschiene 2 an Bereiche 123 der Unterschiene 1 anstoßen und so ein Klappern verursachen. Auch dieser obere Bereich 33 des Lagerkörpers 3 ist einstückig mit dem käfigförmigen Träger 312 ausgebildet.

Die Unterschiene 1 und die Oberschiene 2 sind in zwei im Wesentlichen U-förmigen Umklammerungsbereichen 11, 21 bzw. 12, 22 aneinander verschiebbar festgelegt. Die Unterschiene 1 und die Oberschiene 2 sind dabei jeweils als im Wesentlichen L-förmige Schiene ausgebildet, so dass sich die Umklammerungsbereiche diagonal gegenüber liegen. Im ersten Umklammerungsbereich 11, 21 ist eine Kugellagerführung mit Lagerkugeln 4 vorgesehen. Im zweiten Umklammerungsbereich 12, 22 ist der Lagerkörper 3 angeordnet, so dass die Unterschiene 1 und die Oberschiene 2 gegeneinander verspannt sind. An der Unterschiene 1 sind Anschläge 13 angeordnet, mittels derer der Lagerkörper 3 in einer vorgegebenen Position relativ zur Unterschiene 1 gehalten wird. Ein solcher Anschlag kann in einer anderen Ausführungsform alternativ auch an der Oberschiene 2 vorgesehen sein.

In hier nicht gezeigten Ausführungsformen können die Lagerkugeln 310, 320 auch mit Lagerrollen oder Lagerwalzen kombiniert werden oder durch diese ersetzt werden. Weiterhin kann auf die Anordnung von Lagerkugeln 320 im Seitenbereich 32 des Lagerkörpers 3 verzichtet werden und lediglich im unteren Bereich 31 des Lagerkörpers 3 Lagerkugeln 310 verwendet werden.

In einer weiteren, hier nicht gezeigten Ausführungsform weist der Lagerkörper keinen seitlichen Bereich auf, sondern ist nur im unteren Bereich zur Abstützung von vertikal zwischen der Unterschiene 1 und der Oberschiene 2 angeordnet.

Die Längsführung wird aus dem Bausatz hergestellt, indem einer der Lagerkörper 3 mit den gewünschten Gleiteigenschaften ausgewählt wird, in die Unterschiene 1 eingesetzt wird und die Oberschiene 2 mit der Unterschiene 1 verschiebbar verbunden wird.

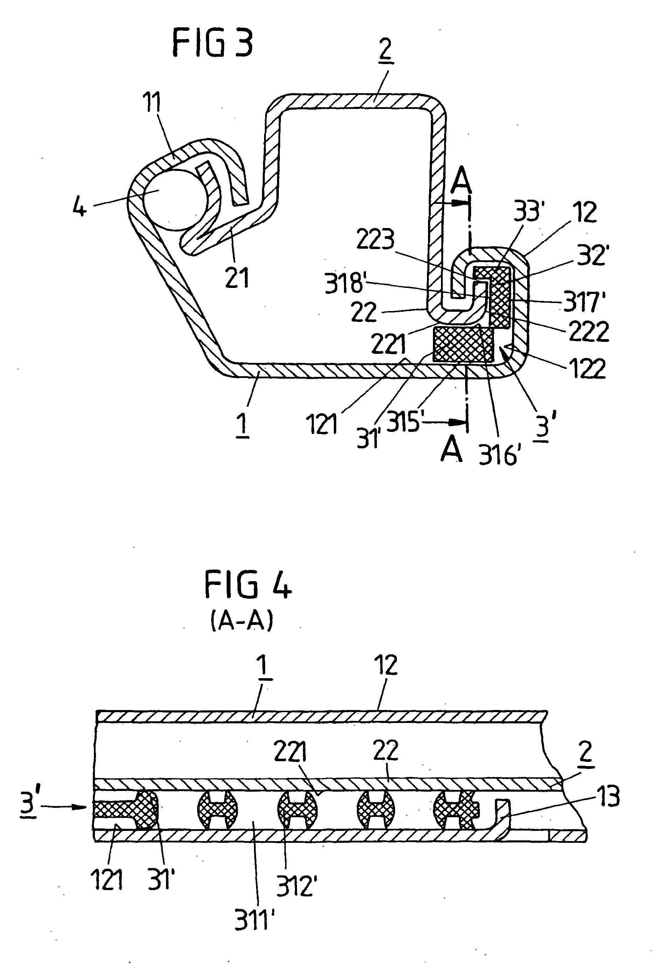

In den Figuren 3 und 4 wird eine Sitzlängsverstellung in einer zweiten Ausführungsform gezeigt, wobei die Figur 4 wiederum einen Schnitt entlang der Ebene A-A zeigt.

Die Unterschiene 1 und die Oberschiene 2 entsprechen identisch den in den Figuren 1 und 2 gezeigten Schienen. Es handelt sich hier um die fest vorgegebene Unterschiene 1 und die fest vorgegebene Oberschiene 2, die dem Bausatz unveränderbar zugrunde liegt. Die einzelnen Details der beiden Schienen können daher der obenstehenden Beschreibung entnommen werden; die Bezugszeichen sind identisch.

In der gezeigten Ausführungsform wird nun ein anderer Lagerköper 3' verwendet, der gegenüber dem in den Figuren 1 und 2 gezeigten Lagerkörper 3 andere Gleiteigenschaften aufweist. Der in der hier verwendete Lagerkörper 3' verursacht eine höhere Reibung zwischen der Unterschiene 1 und der Oberschiene 2, so dass dieser Lagerkörper aus dem Bausatz zur Herstellung einer Sitzlängsverstellung zum Antrieb mit einem (hier nicht gezeigten) Verstellmotor ausgewählt wird. Durch die Verwendung eines solchen Lagerkörpers 3' höherer Reibung bzw. geringerer Leichtgängigkeit wird erreicht, dass für den Verstellmotor bzw. ein Getriebe schädliche Überholeffekte und ein Klappern des Getriebes vermieden werden. Die Herstellung und der Einbau eines solchen Lagerkörpers 3' ist einfacher und kostengünstiger und das erforderliche höhere Losbrechmoment kann von den Verstellmotoren üblicher Weise problemlos aufgebracht werden.

Der Lagerkörper 3' ist im gleichen Bereich zwischen der Unterschiene 1 und der Oberschiene 2 angeordnet, wie der Lagerkörper 3 des weiter oben beschriebenen Ausführungsbeispiels der Figuren 1 und 2. Gegenüber diesem vorher beschriebenen Lagerkörper 3 weist der hier gezeigte Lagerkörper 3' keinerlei Rollkörper auf, so dass es sich hierbei ausschließlich um ein zwischen den Schienen angeordnetes Gleitlager handelt.

Der Lagerkörper 3' weist einen unteren Bereich 31' auf, der vertikale, vom Fahrzeugsitz über die Oberschiene 2 auf die Unterschiene 1 eingeleitete Kräfte aufnimmt. Ein weiterer Bereich 32' des Lagerkörpers 3' ist seitlich angeordnet zur Aufnahme von Seitenführungskräften. Ebenso wie in der oben beschriebenen ersten Ausführungsform ist ein oberer Bereich 33' vorgesehen, der ein Zusammenstoßen bzw. Klappern der beiden Schienen verhindert, wenn die Oberschiene 2 von der Unterschiene 1 abgehoben wird. Im Wesentlichen bildet dieser Lagerkörper 3' wiederum ein L-förmiges Profil aus, das einen unteren Bereich 31' und einen seitlichen Bereich 32' aufweist. Auch dieser Lagerkörper 3' ist vorteilhaft einstückig aus einem Kunststoff ausgebildet, insbesondere aus Polyamid oder einem anderen Kunststoff, der gute Gleiteigenschaften bei geringer Abnutzung aufweist.

Der Lagerkörper 3' liegt mit seinem unteren Bereich 31' an Oberflächen 121, 221 der Unterschiene 1 und der Oberschiene 2 an. An dem unteren Bereich 31' des Lagerkörpers 3' sind dabei Gleitführungen 315', 316' vorgesehen, die mit den Oberflächen 121, 221 der Unterschiene 1 und Oberschiene 2 in Kontakt stehen. In seinem seitlichen Bereich 32' liegt der Lagerkörper 3' ebenfalls an Oberflächen 122, 222 der Unterschiene 1 und Oberschiene 2 an. Auch hier sind Gleitführungen 317', 318' vorgesehen, die an den jeweiligen Oberflächen 122, 222 der Unterschiene 1 und der Oberschiene 2 anliegen. Hierdurch wird ein Spiel der beiden Schienen gegeneinander vermieden und eine Verspannung der Umklammerungsbereiche 11, 21 bzw. 12, 22 der Unterschiene 1 und der Oberschiene 2 erreicht.

Wie in Figur 4 deutlich zu erkennen, weist der Lagerkörper 3' einen käfigförmigen Träger 312' auf, der Aufnahmen 311' aufweist, die auch zur Aufnahme von Rollkörpern dienen können. Im Wesentlichen entspricht der Träger 312' daher dem in den Figuren 1 und 2 gezeigten Träger 312, allerdings sind in der in den Figuren 3 und 4 gezeigten Ausführungsform keine Rollkörper und insbesondere keine Rollkugeln in den Aussparungen 311' angeordnet, so dass Lagerung der Oberschiene und der Unterschiene am Träger 312' ausschließlich in Gleitbereichen stattfindet. Der Träger 312' kann aus einem Kunststoff, insbesondere Polyamid, bestehen und kann, wie in der in den Figuren 1 und 2 gezeigten Ausführungsform einstückig, insbesondere als Druckguss oder Spritzgussteil, ausgebildet sein.

Zur Herstellung der Längsführung wird hier ebenfalls der den gewünschten Anwendungsbedingungen entsprechende Lagerkörper 3' ausgewählt und dann zwischen der Unterschiene 1 und der Oberschiene 2 angeordnet.

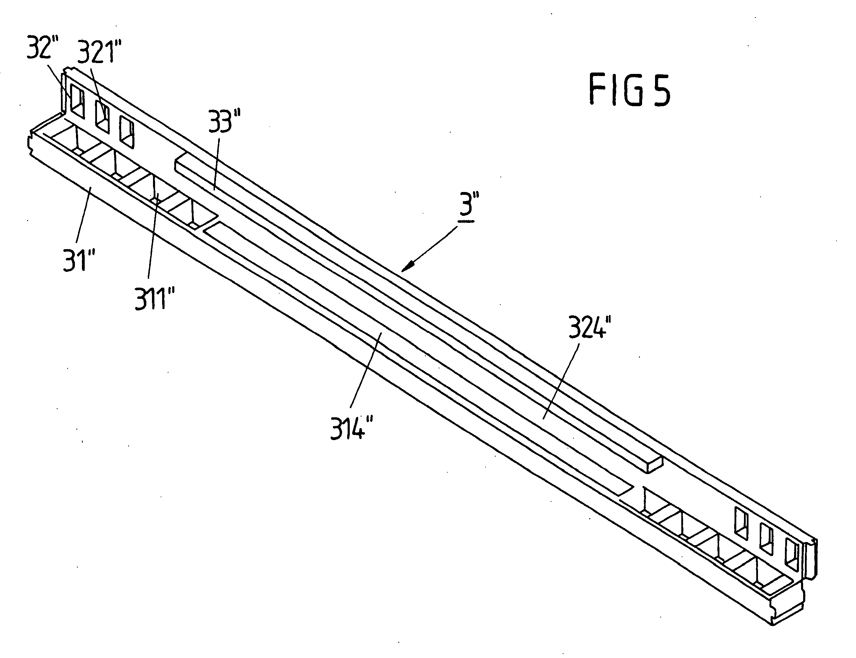

In Figur 5 ist ein Lagerkörper 3" in einer perspektivischen Ansicht gezeigt, der ebenfalls in dem Bausatz verwendbar ist und zwischen der fest vorgegebenen Unterschiene 1 und Oberschiene 2 der vorstehenden Ausführungsbeispiele angeordnet werden kann.

Der Lagerkörper 3" weist einen unteren Bereich 31" und einen seitlichen Bereich 32" auf, die im Wesentlichen senkrecht aufeinander stehen, wobei der Lagerkörper 3" ein L-förmiges Profil ausbildet. Der Lagerkörper 3" ist einstückig aus einem Kunststoff gefertigt.

In dem unteren Bereich 31" sind Aufnahmen 311" vorgesehen, in die hier nicht gezeigte Rollkörper eingebracht werden können. Weiterhin ist im unteren Bereich 31" ein Gleitführungsbereich 314" angeordnet, in dem keinerlei Aussparungen angeordnet sind und der im eingebauten Zustand direkt an den Oberflächen der Unterschiene und der Oberschiene anliegt. Dieser Gleitführungsbereich 314" kann gegenüber der übrigen Oberfläche des unteren Bereiches 31" leicht erhaben ausgeführt sein.

In den seitlichen Bereichen 32" sind ebenfalls Aufnahmen 321" angeordnet, die ebenfalls zur Aufnahme von Rollkörpern dienen. Auch hier ist, analog zum unteren Bereich 31 ", ein Gleitführungsbereich 324" vorgesehen, der ebenso eine erhabene Ausgestaltung aufweisen kann.

Im oberen Bereich des Lagerkörpers 3" ist ein weiterer Gleitführungsbereich 33" angeordnet, der bei einem Abheben der Oberschiene von der Unterschiene ein Klappern verhindern soll.

Der in der Figur 5 gezeigte Lagerkörper 3" ist nun in zwei unterschiedlichen Ausführungsformen in dem Bausatz verwendbar. Zum einen kann der Lagerkörper 3" in der dargestellten Form, also ohne Rollenkörper, verwendet werden. In dieser Ausführungsform wird eine höhere Reibung zwischen der Oberschiene und der Unterschiene erreicht, so dass diese Ausführungsform zur Verwendung in einer Längsverstellung mit einem Verstellmotor verwendet werden kann.

In einer zweiten Ausführungsform werden in den Aufnahmen 311", 321" Rollkörper angeordnet und so ein Lagerkörper 3" hergestellt, der eine niedrige Reibung zwischen den beiden Schienen verursacht. Der Lagerkörper 3" der Figur 5 dient so auch als Träger für die Rollkörper. In dieser Ausführungsform kann der Lagerkörper für eine manuelle Längsverstellung verwendet werden.

Mit Vorteil sind die erhabenen Gleitführungsbereiche 314", 324" so ausgebildet, dass sie die gleichen Außenabmessungen aufweisen, wie eventuell eingesetzte Rollenlager.

Durch diesen flexiblen Einsatz des vorgestellten Lagerkörpers 3" können hier weitere Kosten gespart werden, da nur ein einziger Lagerkörper vorgehalten werden muss, der in einer ersten Ausführung als solcher im Bausatz eingebaut wird und in einer zweiten Ausführung als Träger für Rollkörper dient. Weiterhin werden im Bausatz für die beiden unterschiedlichen Anwendungsbereiche die identischen Unter- und Oberschienen verwendet, wodurch ebenfalls Kosten eingespart werden können.

## Patentansprüche

1. Bausatz für Längsführungen für Kraftfahrzeugsitze, wobei der Bausatz eine fest vorgegebene Unterschiene zur Anordnung in einem Kraftfahrzeuginnenraum und eine fest vorgegebene Oberschiene zur Anordnung an einem Kraftfahrzeugsitz aufweist, an der fest vorgegebenen Unterschiene die fest vorgegebene Oberschiene verschiebbar gehalten ist und zwischen der fest vorgegebenen Unterschiene und der fest vorgegebenen Oberschiene mindestens ein Lagerkörper zur Aufnahme zwischen der Oberschiene und der Unterschiene wirkender Kräfte angeordnet ist,
**dadurch gekennzeichnet,**
**dass** der Bausatz einen ersten und einen zweiten Lagerkörper (3, 3', 3") unterschiedlicher Gleiteigenschaften umfasst und entweder der erste oder der zweite Lagerkörper (3, 3', 3") zwischen der fest vorgegebenen Unterschiene (1) und der fest vorgegebenen Oberschiene (2) angeordnet ist, wobei der erste und der zweite Lagerkörper (3, 3') jeweils einen identischen Träger (312, 312') aufweisen, wobei der Träger (312) des ersten Lagerkörpers (3) und der Träger (312') des zweiten Lagerkörper (3') jeweils mindestens eine Aufnahme (311, 311') für mindestens einen Rollkörper (310) aufweisen und wobei in mindestens einer Aufnahme (311) des ersten Lagerkörpers (3) mindestens ein Rollkörper (310) aufgenommen ist und der zweite Lagerkörper (3') nur den Träger (312') selbst aufweist.

2. Bausatz nach Anspruch 1, **dadurch gekennzeichnet, dass** der erste Lagerkörper (3) als mindestens einen Rollkörper (310, 320) eine Lagerwalze, eine Lagerrolle und/oder eine Lagerkugel aufweist.

3. Bausatz nach Anspruch 1, **dadurch gekennzeichnet, dass** der zweite Lagerkörper (3') mindestens eine Gleitführung (315', 316', 317', 318') aus einem Kunststoff, insbesondere Polyamid aufweist.

4. Bausatz nach Anspruch 1, **dadurch gekennzeichnet, dass** der zweite Lagerkörper (3') einstückig, insbesondere als Druckguss- oder Spritzgussteil ausgebildet ist.

5. Bausatz nach einem der vorstehenden Ansprüche, **dadurch gekennzeichnet, dass** der erste und/oder der zweite Lagerkörper (3, 3') jeweils einen ersten Bereich (31, 31') zur Aufnahme von Kräften in Richtung der Sitzbelastung und jeweils einen zweiten Bereich (32, 32') zur Aufnahme von dazu senkrecht wirkenden Kräften aufweisen.

6. Bausatz nach Anspruch 5, **dadurch gekennzeichnet, dass** der erste Bereich (31, 31') und der zweite Bereich (32, 32') senkrecht zueinander angeordnet sind.

7. Bausatz nach Anspruch 5 oder 6, **dadurch gekennzeichnet, dass** der erste Lagerkörper (3) im ersten Bereich (31) mindestens einen Rollkörper (310) aufweist.

8. Bausatz nach Anspruch 7, **dadurch gekennzeichnet, dass** der erste Lagerkörper (3) auch im zweiten Bereich (32) mindestens einen Rollkörper (320) aufweist.

9. Bausatz nach Anspruch 8, **dadurch gekennzeichnet, dass** die Rollkörper (320) des zweiten Bereichs (32) einen Durchmesser aufweisen, der maximal 2/3 des Durchmessers der Rollkörper (310) des ersten Bereichs (31) misst.

10. Bausatz nach Anspruch 7, **dadurch gekennzeichnet, dass** der erste Lagerkörper (3) im zweiten Bereich (32) eine Gleitführung aufweist.

11. Bausatz nach Anspruch 5 oder 6, **dadurch gekennzeichnet, dass** der zweite Lagerkörper (3') im ersten Bereich (31') und im zweiten Bereich (32') eine Gleitführung (315', 316', 317', 318') aufweist.

12. Bausatz nach einem der vorhergehenden Ansprüche, **dadurch gekennzeichnet, dass** an der Unterschiene (1) und/oder der Oberschiene (2) Anschläge (13) vorgesehen sind, mittels derer die Position des ersten oder des zweiten Lagerkörpers (3, 3') relativ zur Unterschiene (1) und/oder Oberschiene (2) festlegbar ist.

13. Bausatz nach einem der vorstehenden Ansprüche, **dadurch gekennzeichnet, dass** die fest vorgegebene Oberschiene (2) und die fest vorgegebene Unterschiene (1) entlang ihrer Längsausdehnung jeweils mindestens ein im Wesentlichen U-förmiges Profil (11, 12, 21, 22) aufweisen, über das sie miteinander verschiebbar in Eingriff stehen.

14. Verfahren zur Montage von Längsführungen von Kraftfahrzeugsitzen, wobei an einer fest vorgegebenen Unterschiene zur Anordnung am Boden eines Kraftfahrzeugs eine fest vorgegebene Oberschiene zur Anordnung an einem Fahrzeugsitz verschiebbar angeordnet wird und zwischen der fest vorgegebenen Unterschiene und der fest vorgegebenen Oberschiene mindestens ein Lagerkörper zur Aufnahme zwischen der Oberschiene und der Unterschiene wirkender Kräfte angeordnet wird,
**dadurch gekennzeichnet,**
**dass** ein erster Lagerkörper (3) und ein zweiter Lagerkörper (3') unterschiedlicher Gleiteigenschaften bereit gestellt werden und entweder der erste Lagerkörper (3) oder der zweite Lagerkörper (3') ausgewählt und zwischen der fest vorgegebenen Unterschiene (1) und der fest vorgegebenen Oberschiene (2) angeordnet wird, wobei der erste und der zweite Lagerkörper (3, 3') jeweils einen identischen Träger (312, 312') mit mindestens einer Aufnahme (311, 311') für mindestens einen Rollkörper (310) aufweisen und zur Ausbildung des ersten Lagerkörpers (3), der im eingebauten Zustand eine gegenüber dem zweiten Lagerkörper (3') geringere Reibung zwischen der Oberschiene (2) und der Unterschiene (1) bewirkt, in mindestens einer Aufnahme (311) mindestens ein Rollkörper (310) angeordnet wird, und wobei der zweite Lagerkörper (3') nur durch den Träger (312') ausgebildet wird.

15. Verfahren nach Anspruch 14, **dadurch gekennzeichnet, dass** zur Montage einer manuell verstellbaren Längsführung der erste Lagerkörper (3), der im eingebauten Zustand eine gegenüber dem zweiten Lagerkörper (3') geringere Reibung zwischen der Oberschiene (2) und der Unterschiene (1) bewirkt, und zur Montage einer motorisch angetriebenen Längsführung der zweite Lagerkörper (3'), der im eingebauten Zustand eine gegenüber dem ersten Lagerkörper (3) höhere Reibung zwischen der Oberschiene (2) und der Unterschiene (1) bewirkt, ausgewählt wird.

## Claims

1. Construction kit for longitudinal guides for motor vehicle seats, wherein the construction kit comprises a fixedly pre-defined lower rail to be arranged in a motor vehicle inner space and a fixedly pre-defined upper rail to be arranged at a motor vehicle seat, the fixedly pre-defined upper rail being displacably held at the fixedly pre-defined lower rail, and at least one bearing body is arranged between the fixedly pre-defined lower rail and the fixedly pre-defined upper rail for taking up forces acting between the upper rail and the lower rail,
**characterized in that**
the construction kit comprises a first and a second bearing body (3, 3', 3") having different sliding properties and either the first or the second bearing body (3, 3', 3") is arranged between the fixedly pre-defined upper rail (1) und the fixedly pre-defined lower rail (2), wherein the first and the second bearing body (3, 3') each comprise an identical carrier (312, 312'), wherein the carrier (312) of the first bearing body (3) and the carrier (312') of the second bearing body (3') each comprise at least one receptacle (311, 311') for at least one rolling body (310), and wherein at least one rolling body (310) is received in at least one receptacle (311) of the first bearing body (3) and the second rolling body (3') merely comprises the carrier (312) itself.

2. Construction kit according to claim 1, **characterized in that** the first bearing body (3) comprises, as at least one rolling body (310, 320), a bearing barrel, a bearing roller and/or a bearing ball.

3. Construction kit according to claim 1, **characterized in that** the second bearing body (3') comprises at least one sliding guide (315', 316', 317', 318') out of a plastic, particularly polyamide.

4. Construction kit according to claim 1, **characterized in that** the second bearing body (3') is formed in one piece, particularly as a die casted or injection molded part.

5. Construction kit according to claim 1, **characterized in that** the first and/or the second bearing body (3, 3') each comprise a first region (31, 31') for taking up forces in the direction of the seat load and a second region (32, 32") for taking up forces acting perpendicular thereto.

6. Construction kit according to claim 5, **characterized in that** the first region (31, 31') and the second region (32, 32') are arranged perpendicular with respect to each other.

7. Construction kit according to claim 5 or 6, **characterized in that** the first bearing body (3) comprises at least one rolling body (310) in the first region (31).

8. Construction kit according to claim 7, **characterized in that** the first bearing body (3) also comprises at least one rolling body (320) in the second region (32).

9. Construction kit according to claim 8, **characterized in that** the rolling bodies (320) of the second region (32) comprise a diameter which amounts to at most 2/3 of the diameter of the rolling bodies (310) of the first region (31).

10. Construction kit according to claim 7, **characterized in that** the first bearing body (3) comprises a sliding guide in the second region (32).

11. Construction kit according to claims 5 or 6, **characterized in that** the second bearing body (3') comprises a sliding guide (315', 316', 317', 318') in the first region (31') and in the second region (32').

12. Construction kit according to one of the preceding claims, **characterized in that** stops (13) are provided at the lower rail (1) and/or at the upper rail (2), by means of which the position of the first or the second bearing body (3, 3') relative to the lower rail (1) and/or the upper rail (2) can be fixed.

13. Construction kit according to one of the preceding claims, **characterized in that** the fixedly pre-defined upper rail (2) and the fixedly pre-defined lower rail (1) comprise at least one essentially U-shaped profile (11, 12, 21, 22) along their longitudinal extension, via which they are slidably engaged with each other.

14. Method for mounting longitudinal guides of motor vehicle seats, wherein at a fixedly pre-defined lower rail to be arranged at a bottom of a motor vehicle a fixedly pre-defined upper rail to be arranged at a motor vehicle seat is displacably arranged and at least one bearing body for taking up forces acting between the upper rail and the lower rail is arranged between the fixedly pre-defined lower rail and the fixedly pre-defined upper rail,
**characterized in that**
a first bearing body (3) and a second bearing body (3') having different sliding properties are provided and either the first bearing body (3) or the second bearing body (3') is selected and arranged between the fixedly pre-defined upper rail (1) und the fixedly pre-defined lower rail (2), wherein the first and the second bearing body (3, 3') each comprise an identical carrier (312, 312') having at least one receptacle (311, 311') for at least one rolling body (310), and for forming the first bearing body (3), which, in the built-in state, causes a smaller friction between the upper rail (2) and the lower rail (1) with respect to the second bearing body (3'), at least one rolling body (310) is arranged in at least one receptacle (311), and wherein the second bearing body (3') is merely formed by the carrier (312').

15. Method according to claim 14, **characterized in that**, for mounting a manually adjustable longitudinal guide, the first bearing body (3), that causes in the built-in state a smaller friction between the upper rail (2) and the lower rail (1) with respect to the second bearing body (3'), and for mounting a motor-driven longitudinal guide, the second bearing body (3'), that causes in the built-in state a higher friction between the upper rail (2) and the lower rail (1) with respect to the first bearing body (3), is selected.

## Revendications

1. Kit pour glissières de sièges de véhicule automobile, le kit présentant un rail inférieur fixement prédéfini pour l'agencement dans un habitacle de véhicule et un rail supérieur fixement prédéfini pour l'agencement sur un siège de véhicule, sur le rail inférieur fixement prédéfini étant maintenu de manière mobile le rail supérieur fixement prédéfini, et entre le rail inférieur fixement prédéfini et le rail supérieur fixement prédéfini étant disposé au moins un corps de palier pour la réception de forces agissant entre le rail supérieur et le rail inférieur,
**caractérisé en ce**
**que** le kit comporte un premier et un second corps de palier (3, 3', 3") présentant différentes propriétés de glissement et le premier ou le second corps de palier (3, 3', 3") est disposé entre le rail inférieur (1) fixement prédéfini et le rail supérieur (2) fixement prédéfini, le premier et le second corps de palier (3, 3') présentant respectivement un support (312, 312') identique, le support (312) du premier corps de palier (3) et le support (312') du second corps de palier (3') présentant respectivement au moins un logement (311, 311') pour au moins un corps de roulement (310) et dans au moins un logement (311) du premier corps de palier (3) étant logé au moins un corps de roulement (310) et le second corps de palier (3') présentant uniquement le support (312') lui-même.

2. Kit selon la revendication 1, **caractérisé en ce que** le premier corps de palier (3) présente comme au moins un corps de roulement (310, 320) un palier à roulement, un galet de roulement et/ou une bille de roulement.

3. Kit selon la revendication 1, **caractérisé en ce que** le second corps de palier (3') présente au moins une coulisse (315', 316', 317', 318') en une matière plastique, en particulier en polyamide.

4. Kit selon la revendication 1, **caractérisé en ce que** le second corps de palier (3') est réalisé d'un seul tenant, en particulier comme une pièce moulée sous pression ou par injection.

5. Kit selon l'une quelconque des revendications précédentes, **caractérisé en ce que** le premier et/ou le second corps de palier (3, 3') présentent respectivement une première zone (31, 31') pour la réception de forces en direction de la charge de siège et respectivement une seconde zone (32, 32') pour la réception de forces agissant perpendiculairement à celle-ci.

6. Kit selon la revendication 5, **caractérisé en ce que** la première zone (31, 31') et la seconde zone (32, 32') sont disposées perpendiculairement l'une à l'autre.

7. Kit selon la revendication 5 ou 6, **caractérisé en ce que** le premier corps de palier (3) présente dans la première zone (31) au moins un corps de roulement (310).

8. Kit selon la revendication 7, **caractérisé en ce que** le premier corps de palier (3) présente également dans la seconde zone (32) au moins un corps de roulement (320).

9. Kit selon la revendication 8, **caractérisé en ce que** les corps de roulement (320) de la seconde zone (32) présentent un diamètre qui mesure au maximum 2/3 du diamètre des corps de roulement (310) de la première zone (31).

10. Kit selon la revendication 7, **caractérisé en ce que** le premier corps de palier (3) présente dans la seconde zone (32) une coulisse.

11. Kit selon la revendication 5 ou 6, **caractérisé en ce que** le second corps de palier (3') présente dans la première zone (31') et dans la seconde zone (32') une coulisse (315', 316', 317', 318').

12. Kit selon l'une quelconque des revendications précédentes, **caractérisé en ce que** sur le rail inférieur (1) et/ou le rail supérieur (2) sont prévues des butées, à l'aide desquelles la position du premier ou du second corps de palier (3, 3') peut être déterminée par rapport au rail inférieur (1) et/ou au rail supérieur (2).

13. Kit selon l'une quelconque des revendications précédentes, **caractérisé en ce que** le rail supérieur (2) fixement prédéfini et le rail inférieur (1) fixement prédéfini présentent le long de leur dimension longitudinale respectivement au moins un profilé (11, 12, 21, 22) essentiellement en forme de U, par le biais duquel ils sont en prise l'un avec l'autre de manière mobile.

14. Procédé de montage de glissières de sièges de véhicule automobile, sur un rail inférieur fixement prédéfini pour l'agencement sur le plancher d'un véhicule étant disposé de manière mobile un rail supérieur fixement prédéfini pour l'agencement sur un siège de véhicule, et entre le rail inférieur fixement prédéfini et le rail supérieur fixement prédéfini étant disposé au moins un corps de palier pour la réception de forces agissant entre le rail supérieur et le rail inférieur,
**caractérisé en ce**
**qu'**un premier corps de palier (3) et un second corps de palier (3') présentant différentes propriétés de glissement sont mis à disposition, et le premier corps de palier (3) ou le second corps de palier (3') est sélectionné et est disposé entre le rail inférieur (1) fixement prédéfini et le rail supérieur (2) fixement prédéfini, le premier et le second corps de palier (3, 3') présentant respectivement un support (312, 312') identique avec au moins un logement (311, 311') pour au moins un corps de roulement (310) et pour la réalisation du premier corps de palier (3) qui provoque à l'état intégré un frottement plus faible par rapport au second corps de palier (3') entre le rail supérieur (2) et le rail inférieur (1), dans au moins un logement (311) étant disposé au moins un corps de roulement (310), et le second corps de palier (3') étant réalisé uniquement par le support (312').

15. Procédé selon la revendication 14, **caractérisé en ce que** le premier corps de palier (3), qui provoque à l'état intégré un frottement plus faible par rapport au second corps de palier (3') entre le rail supérieur (2) et le rail inférieur (1), est sélectionné pour le montage d'une glissière réglable manuellement, et le second corps de palier (3') qui provoque à l'état intégré un frottement plus élevé par rapport au premier corps de palier (3) entre le rail supérieur (2) et le rail inférieur (1) est sélectionné pour le montage d'une glissière entraînée par moteur.
